# EUROPEAN PATENT APPLICATION

(11) **EP 4 738 037 A1**
(43) Date of publication of application: **06.05.2026**
(21) Application number: 24210033.7
(22) Date of filing: 31.10.2024
(51) Int. Cl.: G05B 23/02

(54) **IMPROVING THE EXPLAINABILITY OF ALARMS IN INDUSTRIAL PLANTS**

(71) Applicant: ABB SCHWEIZ AG, 5400 Baden (CH)
(72) Inventor: STREM, Nika, 68163 Mannheim (DE); HUEHNERBEIN, Ruben, 69123 Heidelberg (DE); DIX, Marcel, 78476 Allensbach (DE); MACZEY, Sylvia, 69493 Hirschberg (DE); ZHANG, Yanqing, 11218 Stockholm (SE); ZIOBRO, Dawid, 72462 Västerås (SE); BRORSSON, Emmanuel, 72469 Västerås (SE); MANCA, Gianluca, 80935 München (DE); BHATTACHARYA, Nilavra, 68167 Mannheim (DE); KOTRIWALA, Arzam Muzaffar, 68526 Ladenburg (DE); BUELOW, Fabian, 68526 Ladenburg (DE)
(74) Representative: Maiwald GmbH

(57) **Abstract**

A method (100) for monitoring and/or controlling an industrial process (2) that is executed on an industrial plant (1), comprising the steps of:
• obtaining (110) predictions (3a) for future values of one or more process variables (3) that characterize the state, and/or the behavior, of the industrial process (2);
• determining (120), based at least in part on these predictions (3a) for future values, a prediction (4a) as to which one or more alarms (4) from a given set of possible alarms are likely to be raised within a predetermined time frame reaching into the future; and
• identifying (130) at least one process variable (3*) whose predicted evolution (3a) over time is responsible for the likely raising of the one or more alarms (4a).

## Description

### FIELD OF THE INVENTION

The invention relates to the management of alarms that accrue in distributed control systems, DCS, of industrial plants during the execution of industrial processes.

### BACKGROUND

Industrial plants executing industrial processes are controlled by distributed control systems, DCS. A DCS allows an operator of the plant to make a decision regarding the running of the plant on a rather abstract level, and translates this decision into setpoints for low-level controllers and other instructions for the assets that are physically involved in the execution of the industrial process.

In a large industrial plant, it is inevitable that not everything works as designed or planned at all times. Therefore, a DCS usually has an alarm system for reporting everything in the industrial plant that is out of the ordinary. Such an alarm system helps plant operators to keep execution of the process stable and safe.

In a large DCS, a large number of alarms will accrue. This creates a large amount of "noise", or "nuisance alarms". It is difficult for a plant operator to filter the really important alarms that require prompt action out of this "noise", which may cause critical alarms to be overlooked.

To aid the operator in noticing important alarms, machine learning models may be used to predict, based on the data available in the industrial plant, important alarms that are likely to be raised. This can give the operator an advance warning of the important alarm, so that, if this alarm is actually raised as predicted, the operator may take immediate action.

When an important alarm is predicted by a machine learning system, this may come as a complete surprise to the operator. The reason for the prediction may not be evident to the operator. This may cause the operator to dismiss the prediction as a false prediction, negating the effect of the advance warning.

### OBJECTIVE OF THE INVENTION

It is therefore an objective of the invention to improve the explainability of predictions of alarms that will likely be raised in an industrial plant executing an industrial process.

This objective is achieved by a method according to the independent claim. Further advantageous embodiments are detailed in the dependent claims.

### DISCLOSURE OF THE INVENTION

The invention provides a method for monitoring and/or controlling an industrial processes that is executed on an industrial plant. The industrial plant may be composed of many different assets that participate in the execution of the industrial process. All these assets may be under the control of a distributed control system. The distributed control system may monitor many process variables that characterize the state, and/or the behavior, of the industrial process. Each process variable may relate to one or more individual assets of the industrial plant. Examples of such process variables are quantities measured by sensors or other measuring instruments in the plant, such as a temperature, a pressure, a voltage, a mass flow, a fill level, or the chemical composition of a mixture of substances. But process variables may also relate to the industrial process, and/or to the industrial plant, as a whole. Examples of such process variables are the total throughput of the industrial process, or an overall energy usage of the industrial plant.

In the course of the method, predictions for future values of one or more process variables that characterize the state, and/or the behavior, of the industrial process are obtained. These predictions may be obtained in any suitable manner. In particular, the predictions may be obtained using a machine learning model. But alternatively or in combination to this, other sources may be used. For example, if a formula or other law for the dependency of a process variable on some other quantity is known, then this formula or other law may be used in the prediction as well. That is, any available a priori knowledge may be put to use to create or improve the predictions for future values of one or more process variables. A trainable regression model that has been trained on training examples of time series or other sequences of values of process variables is one example of a further model that may predict future values of process variables. A simulation model is another example of a model that may be used. In particular, a simulation model may incorporate a lot of a priori knowledge about the industrial process, and/or about the industrial plant.

Based at least in part on these predictions for future values, a prediction is determined as to which one or more alarms from a given set of possible alarms are likely to be raised within a predetermined time frame reaching into the future. This given set of possible alarms may comprise the complete set of alarms available in the industrial plant. But in order to highlight only important alarms, the given set of possible alarms may just as well be limited to these important alarms only. For predicting likely alarms, any suitable model or other tool may be used, such as a trainable XGBoost model that takes individual values, or sequences of values, of process variables as input, or a Random Forest predictor.

Once it has been determined that alarm is likely to be raised, at least one process variable whose predicted evolution over time is responsible for the likely raising of the one or more alarms is identified. For example, on the order of 10-20 process variables may be monitored, and the evolution of about 1-2 of those may be identified as relevant for the likely raising of the alarm. Optionally, on top of the process variable as such, a concrete part of the predicted evolution that is responsible for the likely raising of the one or more alarms may be identified as well. For example, such a concrete part may be given as a time window out of the predicted evolution over time.

Determining a prediction for future values of process variables first, and then determining a prediction as to the likelihood of alarms using these future values, is advantageous over directly predicting the likelihood of alarms from the current values of process variables. As discussed above, there is much more flexibility in that any available a priori knowledge on the possible future development of the process variables may be put to use. Also, there is freedom to, for example, choose one specialized machine learning model for predicting the values of process variables and one other specialized machine learning model for using this to predict the likelihood of alarms. The task that each model has to accomplish is then much easier to accomplish than the monolithic task of predicting alarms from current values of process variables.

Herein, "easier" is to be understood in terms of "difficulty", not necessarily in terms of "computational burden". Making a forward pass through a first model for predicting the future values and then making a forward pass through a second model for predicting the likely alarms may in total involve more computing operations than evaluating one monolithic model. But the question is whether the model is able to accomplish the task in a satisfactory manner or not. This is in some way analogous to the use of a staircase: While it may, in total, cost more energy to walk up 3 meters on stairs than a simple jump 3 meters high would cost, walking up the stairs is feasible for any person, while the jump is feasible for few persons (if any).

The two-step process of first obtaining predictions for future values and then predicting likely alarms also facilitates the identifying of the at least one process variable whose predicted evolution over time is responsible for the likely raising of the one or more alarms. Some modes of predicting likely alarms from the future values may even directly deliver some sort of saliency of the individual process variables.

The identifying of responsible process variables adds a great deal to the explainability of the predicted likely alarms. In particular, when neural networks or similar "black box" machine learning models are used, it is normally hard to understand why a certain decision has been made. By contrast, if the prediction is now of the kind "Important alarm A is likely to be raised in a few minutes because both process variables X and Y keep on climbing and are about to leave their desirable ranges", this is much more comprehensible to an operator. In particular, the prediction is expressed in terms with which an operator of an industrial plant - who is typically not a machine learning expert - is familiar. For example, the operator may decide to look for himself at the indicated process variables X and Y. He may then see that, yes, both variables are indeed climbing. Thus, there is a concrete indication that the prediction does indeed make sense, so it becomes clear and trustworthy. In particular, the more often the plant operator realizes that a prediction of future values of process variables was really on the mark given the later actual values of these process variables, the more the plant operator will trust future predictions.

Most known approaches towards explainability of machine learning decisions are too obscure to a plant operator because they are more focused on explaining the machine learning model than on the "hands-on" industrial process that is described by input data and model predictions. The present approach is focused on the operator and his view of the process, explaining alarm predictions by the changes in the state of the system. Also, because predictions for a time *t* made at a point in time *t* - *x* in the past may, when time *t* actually comes, be compared to what actually happens at this time *t.* Does the process variable really follow its predicted course? Has the predicted alarm really been raised? Thus, the explanations may even be validated automatically, without costly human effort. By contrast, existing approaches for "eXplainable Artificial Intelligence (XAI)" rely on comparing explanations to some kind of ground truth. In simple examples in academic research, human crowdsourcing may be used to create ground truth labels for explanations, e.g., highlighting areas of an image used by the model to identify a cat or a dog. In industrial applications, however, such labelling may amount to full-fledged root cause analysis of alarms, which is not feasible even for a small dataset. This makes evaluation of explainability models highly problematic and very expensive.

In particular, the combination of a prediction of likely alarms and a plausible explanation may prompt an operator of the industrial plant to plan and/or initiate a remedy before this operator even realizes that there is something amiss. This is very advantageous in industrial plants where any changes to the execution of the industrial process need to overcome a high inertia. This is in some way analogous to warning a train driver about an obstacle: To stop before reaching the obstacle, braking needs to be initiated before the driver has a chance to see it.

In a particularly advantageous embodiment, the predictions for future values are obtained by means of a sequence-to-sequence machine learning model that takes a time series of one or more process variables as input and outputs a time series of one or more process variables that at least partially reaches into the future. Process variables usually do not behave in an erratic manner. Rather, the past evolution of the process variable in a certain past timeframe and the future evolution of the same process variable in a timeframe reaching into the future are likely to be part of one and the same long-term trend. For example, if some effect has influenced the process variable in the past, and the effect is still active, it should continue to influence the process variable in a qualitatively similar manner. Thus, sequences are more useful to convey useful information about the state, and/or the behavior, of the industrial process, just like sentences are more useful to convey information than individual words.

Examples of sequence-to-sequence machine learning models whose use is advantageous in the context of the present method include a long short-term memory, LSTM, network, a recurrent neural network, RNN, a temporal convolution network, TCN, or other regression model, and/or a transformer network. In particular, transformer networks are advantageous because they can process all their inputs in a parallel manner. Furthermore, the attention mechanism that is inherent to transformer networks already comprises some notion of explainability: it allows at least some understanding as to on which parts of the inputted sequence the decision for the output is based.

The advantageous use of sequence-to-sequence models is made possible by the division of the overall prediction task into first predicting future values of process variables and then predicting likely alarms. The sequence-to-sequence model would not be so useful for predicting likely alarms because the likely alarms are not of the data type "sequence". For the predicting of the likely alarms, a model that is more suited for alarms as an output, such as a classifier model, may be used. Thus, the division of the overall prediction task into multiple sub-tasks permits to always use the correct tool for each sub-task.

In a further particularly advantageous embodiment, when obtaining predictions for future values of one or more process variables, a sequence of one or more values of the one or more process variables is encoded into a representation by means of a trained encoder model. By means of a trained decoder model, the sought predictions are then decoded from this representation. In this manner, the encoder model and the decoder model may be trained in an encoder-decoder arrangement in a self-supervised manner. Also, such an arrangement further improves the flexibility because there is a choice regarding the encoder model and a choice regarding the decoder model. That is, given one list of encoder models and one list of decoder models, a wide variety of combinations may be created.

For example, time series or other sequences of values of process variables may be encoded using a Temporal Convolutional Network, TCN, as encoder model, or by a long short-term network, LSTM, as encoder model. Irrespective of which model was used as encoder, the obtained representation may, for example, be decoded by a transformer network as decoder model.

Process variables are usually represented as time series. However, sequences of recent events may also be fed into an encoder and combined with the encoding of process variables, thereby realizing a form of multimodal learning.

In particular, the representation may depend on fewer independent variables than the sequence of the one or more values of the one or more process variables. In this manner, the input information is forced through an "information bottleneck". In particular, the encoder may learn how to include only the most relevant information into the representation, and at the same time, the decoder may learn how to make the most out of the limited amount of information in the representation. This is particularly true if the arrangement is pre-trained in an autoencoder configuration towards the goal that the decoder reconstructs the originally inputted sequence from the representation.

A further advantage of the encoder-decoder architecture is that the encoder can also ingest event logs and thus potentially generate a more reliable forecast of process variables.

In a further particularly advantageous embodiment, the determining of the prediction as to which alarms are likely to be raised comprises
- providing predicted future values to a classifier machine learning model that determines classification scores with respect to one or more classes corresponding to alarms; and
- determining the likelihood that a particular alarm is raised based at least in part on the corresponding classification score.

A classifier model is well suited for this task because the alarms that can occur in the industrial plant are discrete entities. That is, there is a certain catalogue of alarms that may occur, but there is nothing in between any two alarms. In this respect, the situation is somewhat similar to the classification of objects in images where there is also a certain catalogue of available object instances. A classifier model would not be suitable for predicting future values of process variables because, as discussed before, these are continuous variables, and sequences of values are more important than individual values. Thus, the possibility to use a classifier model that is well-suited for the predicting of likely alarms is again brought about by the the division of the overall prediction task into first predicting future values of process variables and then predicting likely alarms discussed above.

In one example, whether a particular alarm is deemed to be likely may be determined by comparing the corresponding classification score to a threshold value. If the score reaches or exceeds the threshold value, then the corresponding alarm is deemed to be likely. In another example, a selection of the alarms with the top-N values of corresponding classification scores may be deemed to likely occur. The top-N selection may optionally be combined with the requirement that the classification scores be above a certain threshold value.

It may happen that there is insufficient data for training a classifier model to predict certain alarms. But this may be caused by the application of the present method itself: For example, if an alarm for a certain process variable rising above a first threshold ("high alarm", H) is reliably predicted and a remedy implemented, then this may prevent subsequent alarms ("high-high alarm", HH, or "high-high-high alarm", HHH) to be raised because the corresponding higher thresholds are no longer reached.

In a further particularly advantageous embodiment, at least one process variable whose predicted evolution over time is responsible for the likely raising of a given alarm is identified based at least on a saliency analysis of the output of the classifier machine learning model. To this end, for example, intermediate work products generated within the classifier machine learning model may be evaluated. For example, in a convolutional neural network, feature maps are generated as intermediate products. But tried-and-tested methods for the analysis as to which parts of the input have been particularly relevant for the classification decision are available for many other kinds of classifier machine learning models as well.

In the identifying which process variable may, by virtue of its evolution over time, be responsible for a predicted alarm, any suitable a priori knowledge about the industrial plant may be put to use. A prime example of such a priori knowledge is the topology of the industrial plant. What is already known does not need to be found out by a machine learning model.

Therefore, in a further particularly advantageous embodiment, the identifying of at least one process variable whose predicted evolution over time is responsible for the likely raising of a given alarm comprises:
- determining, based on information about the topology of the industrial plant, out of a complete set of assets, a subset of assets that have a potential to contribute to the raising of the given alarm;
- identifying, from a complete set of process variables of the industrial process, a subset of process variables that are indicative of the operating state of at least one asset from the subset of assets; and
- analyzing, for at least one process variable from the subset of process variables, whether this process variable is responsible for the likely raising of the given alarm.

That is, if the topology of the industrial plant provides for no interaction path from a particular asset to the raising of a given alarm, this asset cannot be responsible for the raising of the alarm. Only process variables that are indicative of the operating state of at least one asset that in turn can contribute to the raising of the given alarm have a chance of being responsible for the likely raising of the given alarm. This means that, from the total set of available process variables, a large fraction can be culled without being investigated further. In a simple example, it may be relevant for a "low filling level" of a tank whether an upstream pump is working, but it is not relevant whether a socket outlet for the janitors in the same room has power.

The root cause for most alarms is some anomaly in the industrial process, and/or in the industrial plant. This finding may be used to narrow down the at least one process variable whose predicted evolution over time is responsible for the likely raising of a given alarm.

Therefore, in a particularly advantageous embodiment, the identifying of this at least one responsible process variable comprises modifying the predicted evolution of at least one candidate process variable by removing, from this predicted evolution, at least one suspected anomaly. For example, values that represent the anomaly may be replaced with average values, or with values that are to be considered "normal" according to any other given criterion.

The behavior of the industrial process is then simulated given this modified evolution of the at least one candidate process variable. That is, a "what-if" scenario without the suspected anomaly is simulated. It is then determined, based on the outcome of the simulation, whether the given alarm is still likely to be raised. If the given alarm is no longer likely to be raised, the candidate process variable is then identified as one process variable whose predicted evolution over time is responsible for the likely raising of the given alarm.

In this manner, a large set of candidate process variables may be tested in a purely computational manner as to whether they are responsible for the given alarm. If this test can be made ahead of time, there may even be time, before the predicted alarm is actually raised, to initiate a remedy. Ideally, applying this remedy may then help to prevent the predicted alarm from being raised in the first place.

Therefore, in a further particularly advantageous embodiment, in response to determining that an alarm is likely to be raised, a remedy for the anomalous state of the industrial process, and/or of the industrial plant, indicated by the alarm is determined. Knowledge of this remedy may then be used in any suitable manner.

In particular, the remedy may be proposed to an operator of the industrial plant. This may be done in any suitable way. For example, the remedy may be displayed as to-be-followed instructions on a screen, or a button or other control that is to be actuated is lit up or otherwise highlighted. In this manner, execution of the remedy may be fostered even in cases where a fully automatic execution of the remedy is not possible. For example, if the remedy comprises mending a particular fault in an industrial asset, this task may be too complex to be executed by a robot yet. It needs to be performed by a human worker. But the present method still saves very much time because the diagnosis what needs to be fixed has been obtained much quicker in an automated manner.

Alternatively or in combination to this, if the remedy may somehow be executed automatically, the remedy may be executed by means of physical interaction with the industrial process, and/or with the industrial plant. For example, if the fill level in a tank is about to drop too low, the supply of its content may be increased, or the draining of its content may be decreased, by actuating other assets in the industrial plant, such as valves and pumps.

In a further particularly advantageous embodiment, it is rated by a predetermined loss function how well predictions for values of one or more process variables at particular future points in time are in agreement with actual values of these process variables acquired later for these points in time. Parameters that characterize how the future values of one or more process variables are predicted are optimized towards the goal of improving the rating by the loss function. For example, these parameters may comprise weights or other parameters of a neural network that predicts future values of process variables. In this manner, the neural network or other entity that is used to predict future values of process variables may be trained in a self-supervised manner: the more the predictions later turn out to be true, the better these predictions are. Thus, the training can be performed "on the job" without requiring any labelling of values of process variables with "ground truth".

Likewise, in a further particularly advantageous embodiment, it is rated by a predetermined loss function how well predicted likely alarms for time frames in the future correspond to alarms that have later actually been raised in these time frames. Parameters that characterize how likely alarms are predicted are optimized towards the goal of improving the rating by the loss function. In this manner, the neural network or other entity that predicts likely alarms may also be trained in a self-supervised manner without requiring the labelling of time frames with likely alarms as "ground truth": the more the predictions turn out to be true, the better they are.

In a further particularly advantageous embodiment, out of the complete set of all alarms available in the industrial plant, only a given subset of important alarms is considered for the rating by the loss function. In this manner, the neural network, machine learning model or other entity that predicts likely alarms may be optimized specifically for predicting these important alarms. That is, the predicted likely alarms will contain less "nuisance alarms" with which an operator tends to be "flooded" in day-to-day operation of the industrial plant. Also, the prediction accuracy for the important alarms will then become better: If there is a very wide variety of different kinds alarms to predict, a trade-off may have to be made as to how good each individual kind of alarms is predicted, so as to achieve a good overall performance. That is, some accuracy regarding an important kind of alarms might get sacrificed for the sake of improving the accuracy regarding a less important kind of alarms. In particular, this may happen once a so-called "Pareto state" has been reached, i.e., it is no longer possible to improve something without making a sacrifice somewhere else. If only important alarms are considered by the loss function, the "available" accuracy is focused on these important alarms only.

In a further particularly advantageous embodiment, the optimizing of the parameters is further based on feedback from an operator of the industrial plant as to which process variables are relevant for the likelihood of a particular alarm or not. In this manner, any a priori knowledge that is available on the side of the operator may be put to use.

In a further particularly advantageous embodiment, based at least in part on the identification of at least one process variable whose predicted evolution over time is responsible for the likely raising of an alarm, a likely root cause for the alarm in at least one asset of the industrial plant may be determined. Determining the root cause is very important when dealing with alarms in industrial plants because fixing this root cause may be the only permanent solution for the problem indicated by the alarm. In particular, the process variable that is determined to be responsible for the likely raising of the alarm may be linked to one or more concrete assets of the industrial plant, and thus provide a clue which asset might be responsible for the alarm. The earlier the root cause is found, the earlier a remedy may be implemented.

In a further particularly advantageous embodiment, the future values of one or more process variables, and/or the alarms that are likely to occur, are predicted for a temporal horizon reaching at most 10 minutes, preferably at most 5 minutes, into the future. These are typical time scales on which trends in industrial processes emerge.

Examples of industrial plants where the present method is particularly useful include power plants, in particular thermal power plants, and here in particular coal-fired power plants. In power plants, many changes to the operation have to overcome a high amount of inertia, so a prediction of likely alarms is beneficial. For example, rotating masses in generators have an amount of inertia that is even used in normal operation to keep the grid frequency stable. Also, in a thermal power plant, there are thermal masses on the way from the furnace where the fuel is burned to the generator where the energy from the fuel is finally converted into electricity. For example, another possible application in a coal-fired power plant is control of a grinding mechanism for coal, where it needs to be ensured that the grinding mechanism always stays in motion and never stops completely because it might otherwise get stuck.

Because it is computer-implemented, the present method may be embodied in the form of a software. The invention therefore also relates to a computer program with machine-readable instructions that, when executed by one or more computers and/or compute instances, cause the one or more computers and/or compute instances to perform the method described above. Examples for compute instances include virtual machines, containers or serverless execution environments in a cloud. The invention also relates to a machine-readable data carrier and/or a download product with the computer program. A download product is a digital product with the computer program that may, e.g., be sold in an online shop for immediate fulfilment and download to one or more computers. The invention also relates to one or more compute instances with the computer program, and/or with the machine-readable data carrier and/or download product.

### DESCRIPTION OF THE FIGURES

In the following, the invention is described using Figures without any intention to limit the scope of the invention. The Figures show:
Figure 1: Exemplary embodiment of the method 100 for monitoring and/or controlling an industrial process 2 that is executed on an industrial plant 1;
Figure 2: Exemplary way of processing values of process variables 3, X, Y, Z into likelihoods for alarms 4, 4a, A, B, C and corresponding reasons 3*, A, B, C;
Figure 3: Exemplary determining of different sections 3*, A, B, C of a prediction 3a of a process variable 3 as relevant for the likely raising of alarms A, B, C.

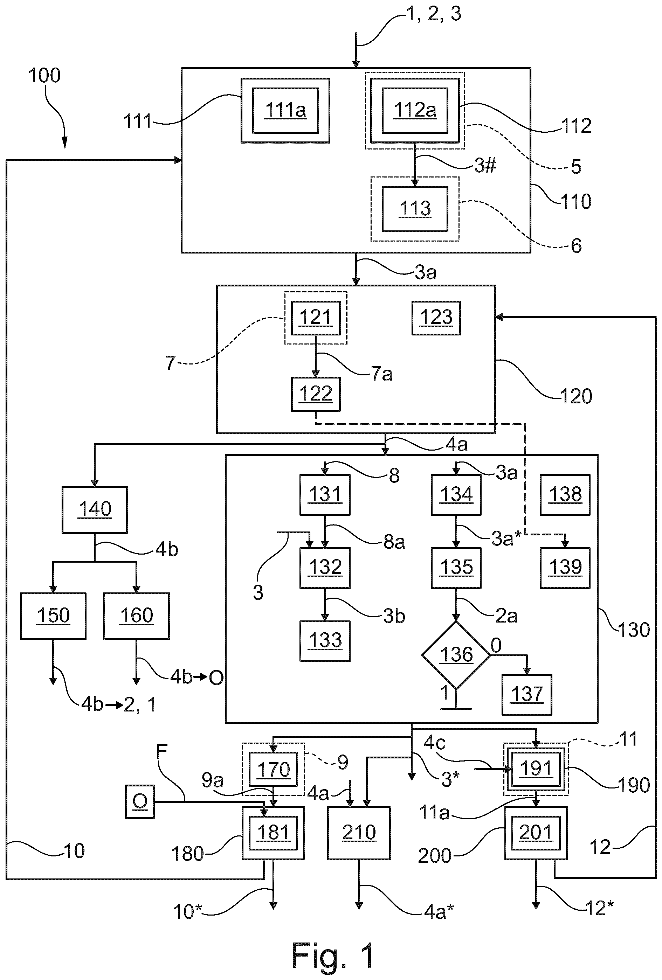

Figure 1 is a schematic flow chart of an embodiment of the method 100 for monitoring and/or controlling an industrial process 2 that is executed on an industrial plant 1. The state and/or behavior of the industrial process 2 is characterized by a set of process variables 3.

In step 110, predictions 3a for future values of one or more process variables 3 are obtained. These process variables 3 characterize the state, and/or the behavior, of the industrial process 2.

According to block 111, the predictions 3a for future values may be obtained by means of a sequence-to-sequence machine learning model that takes a time series of one or more process variables 3 as input and outputs a time series of one or more process variables 3 that at least partially reaches into the future.

According to block 111 a, this sequence-to-sequence machine learning model may comprise a long short-term memory, LSTM, network, a recurrent neural network, RNN, a temporal convolution network, TCN, or other regression model, and/or a transformer network.

According to block 112, by means of a trained encoder model 5, a sequence of one or more values of the one or more process variables 3 may be encoded into a representation 3#. In particular, according to block 112a, this representation 3# may depend on fewer independent variables than the sequence of the one or more values of the one or more process variables 3.

According to block 113, the sought predictions 3a may then be obtained from the representation 3# by means of a trained decoder model 6.

In step 120, based at least in part on the predictions 3a for future values of process variables 3, a prediction 4a is determined as to which one or more alarms 4 from a given set of possible alarms are likely to be raised within a predetermined time frame reaching into the future. These likely alarms are labelled with the reference sign 4a.

According to block 121, predicted future values 3a of process variables 3 may be provided to a classifier machine learning model 7 that determines classification scores 7a with respect to one or more classes corresponding to alarms. According to block 122, the likelihood that a particular alarm 4 is raised based may then be determined at least in part on the corresponding classification score 7a.

According to block 123, the future values 3a of one or more process variables 3 may be predicted for a temporal horizon reaching at most 10 minutes, preferably at most 5 minutes, into the future.

In step 130, at least one process variable 3* whose predicted evolution 3a over time is responsible for the likely raising of the one or more alarms 4a is identified. That is, because the process variable 3* exhibits a certain predicted evolution 3a, the raising of the alarm 4a is more likely than if the process variable 3* did not exhibit this predicted evolution 3a.

According to block 131, based on information about the topology of the industrial plant 1, out of a complete set of assets 8, a subset 8a of assets 8 that have a potential to contribute to the raising of the given alarm 4a may be determined.

According to block 132, from a complete set of process variables 3 of the industrial process 1, a subset 3b of process variables 3 that are indicative of the operating state of at least one asset 8 from the subset 8a of assets 8 may then be determined.

For at least one process variable 3 from the subset 3b of process variables 3, it may then be analyzed, according to block 133, whether this process variable 3 is responsible for the likely raising of the given alarm 4a.

According to block 134, in the course of identifying at least one process variable 3* whose predicted evolution over time is responsible for the likely raising of a given alarm 4a, the predicted evolution 3a of at least one candidate process variable 3 may be modified by removing, from this predicted evolution 3a, at least one suspected anomaly. This produces a modified evolution 3a* of the candidate process variable 3.

According to block 135, the behavior 2a of the industrial process 2 may be simulated given the modified evolution 3a* of the at least one candidate process variable 3.

According to block 136, based on the outcome 2a of this simulation, whether the given alarm 4a is still likely to be raised. If this is not the case (truth value 0), i.e., if the alarm 4a disappears, according to block 137, the candidate process variable 3 may be determined as one process variable 3* whose predicted evolution over time is responsible for the likely raising of the given alarm 4.

According to block 138, the alarms 4a that are likely to occur may be predicted for a temporal horizon reaching at most 10 minutes, preferably at most 5 minutes, into the future.

According to block 139, at least one process variable 3* whose predicted evolution over time is responsible for the likely raising of a given alarm 7a may be identified based at least on a saliency analysis of the output of a classifier machine learning model 7. This output may comprise the classification scores 7a, but also intermediate products 7b that accrue inside the classifier machine learning model 7 during the computation of the classification scores 7a.

In the example shown in Figure 1, in step 140, in response to determining that an alarm 4a is likely to be raised, a remedy 4b for the anomalous state of the industrial process, and/or of the industrial plant, indicated by the alarm 4a may be determined.

In step 150, the remedy 4b may be executed by means of physical interaction with the industrial process 2, and/or with the industrial plant 1.

Alternatively or in combination to this, in step 160, the remedy 4b may be proposed to an operator O of the industrial plant 1.

In the example shown in Figure 1, in step 170, it is rated, by a predetermined loss function 9, how well predictions 3a for values of one or more process variables 3 at particular future points in time are in agreement with actual values of these process variables 3 acquired later for these points in time. A rating 9a results.

In step 180, parameters 10 that characterize how the future values 3a of one or more process variables 3 are predicted are optimized towards the goal of improving the rating 9a by the loss function 9. The optimized state of the parameters 10 is labelled with the reference sign 10*.

According to block 181, this optimizing of the parameters 10 may be further based on feedback F from an operator O of the industrial plant 1 as to which process variables 3 are relevant for the likelihood of a particular alarm 4 or not.

In the example shown in Figure 1, in step 190, it is rated, by a predetermined loss function 11, how well predicted likely alarms 4a for time frames in the future correspond to alarms 4 that have later actually been raised in these time frames. A rating 11a results.

According to block 191, out of the complete set of all alarms 4 available in the industrial plant 1, only a given subset 4c of important alarms 4 may be considered for the rating 11a by the loss function 11.

In step 200, parameters 12 that characterize how likely alarms 4a are predicted are optimized towards the goal of improving the rating 11a by the loss function 11. The optimized state of the parameters 12 is labelled with the reference sign 12*.

According to block 201, this optimizing of the parameters 12 may be further based on feedback F from an operator O of the industrial plant 1 as to which process variables 3 are relevant for the likelihood of a particular alarm 4 or not.

In the example shown in Figure 1, in step 210, based at least in part on the identification of at least one process variable 3* whose predicted evolution over time is responsible for the likely raising of an alarm 4a, a likely root cause 4a* for the alarm 4a in at least one asset 8 of the industrial plant 1 may be determined.

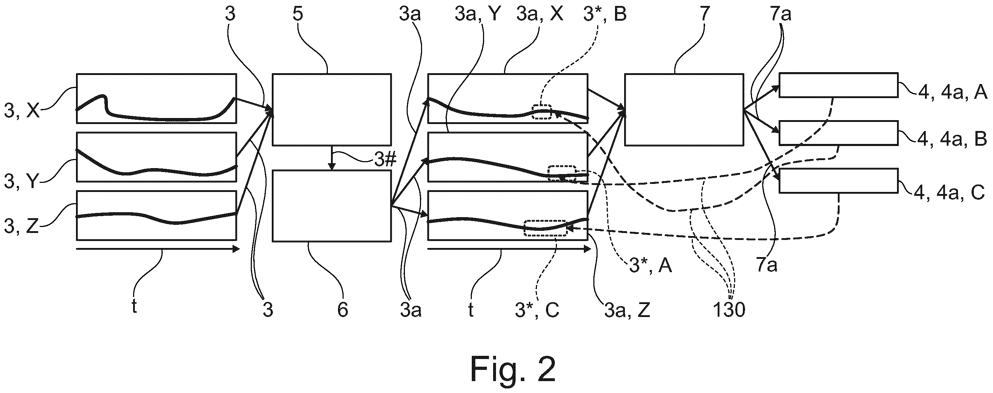

Figure 2 illustrates on one example how values of process variables 3, X, Y, Z may be processed into likelihoods for alarms 4, 4a, A, B, C and corresponding reasons 3*, A, B, C.

In the example shown in Figure 2, the process variables 3 comprise a temperature as variable X, a pressure as variable Y, and a fill level as variable Z. These process variables 3# are encoded into one or more representations 3# by a trained encoder model 5. The representations 3# are decoded by a trained decoder model 6 to form predictions 3a for future values of the process variables 3.

All these predictions 3a are fed into a classifier machine learning model 7 that outputs classification scores 7a with respect to the different alarms 4 that are available in the industrial plant 1. In particular, based on these classification scores 7a, it may be determined which of the alarms 4 are alarms 4a that are likely to be raised. In the example shown in Figure 2, there are three alarms A, B and C.

According to step 130 of the method 100, for each alarm 4a that has been predicted to be likely to be raised, a process variable 3* whose predicted evolution 3a is likely responsible for the likely raising of the alarm 4a is determined. In particular, in the example shown in Figure 2, this can be narrowed down to concrete time windows in the predicted evolution 3a of each process variable 3:
- For alarm A, a time window in the predicted evolution 3a of the pressure Y is identified as responsible;
- for alarm B, a time window in the predicted evolution 3a of the temperature X is identified as responsible; and
- for alarm C, a time window in the predicted evolution 3a of the fill level Z is identified as responsible.

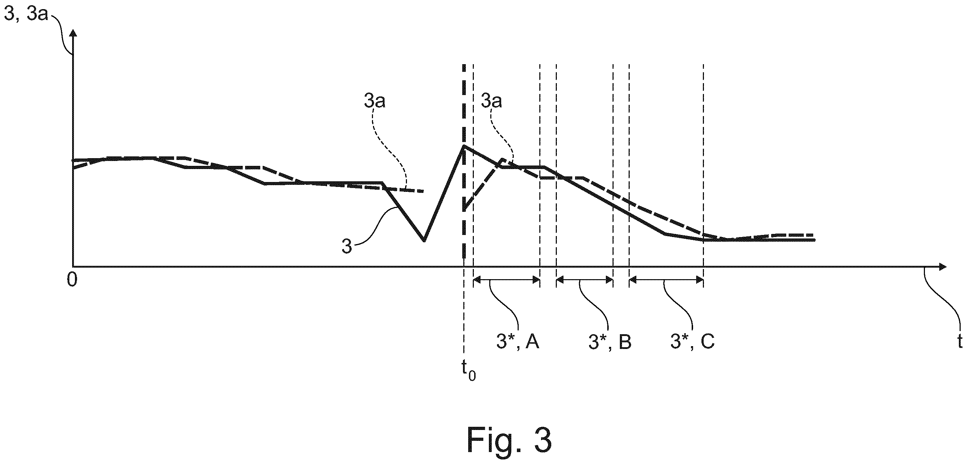

Figure 3 illustrates how different temporal sections of one and the same prediction 3a of a process variable 3 may be responsible for the prediction that certain alarms A, B and C are likely to occur. Both measured values of the process variable 3 and predictions 3a of future values of this process variable 3 are plotted over the time t. The diagram represents the state at time *t*₀. That is, in the past., the model that has made the predictions 3a has been fine-tuned such that the predictions 3a are basically in agreement with the actual measured values 3. This means that, in a real setting, for times *t* > *t*₀, the measured values 3 shouldn't be there because they are not yet known at time *t*₀. In Figure 3, for the purpose of illustration, measurement values obtained later have been plotted for times *t* > *t*₀.

Out of the prediction 3a of the process variable 3 for times *t* > *t*₀*,*
- a first section 3*, A has been determined as responsible for the prediction that alarm A is likely to occur;
- a second section 3*, B has been determined as responsible for the prediction that alarm B is likely to occur; and
- a third section 3*, C has been determined as responsible for the prediction that alarm C is likely to occur.

### List of reference signs:

- 1: industrial plant
- 2: industrial process, executed on industrial plant 1
- 2a: behavior of industrial process 2
- 3: process variable of industrial process 2
- 3b: prediction of process variable 3
- 3#: representation of process variable 3
- 3*: process variable or part thereof responsible for likely raising of alarm 4a
- 3a: prediction of process variable
- 3a*: modified prediction 3a
- 4: alarm available in industrial plant 1
- 4a: alarm 4 that is likely to be raised
- 4a*: root cause for likely alarm 4a
- 4b: remedy for anomalous state that gives rise to alarm 4a
- 4c: subset of important alarms 4
- 5: encoder model for encoding into representation 3#
- 6: decoder model for decoding representation 3# into predictions 3a
- 7: classifier machine learning model
- 7a: classification scores, outputted by classifier model 7
- 7b: intermediate work products generated in classifier model 7
- 8: assets in industrial plant 1
- 8a: subset of assets 8 connected to alarm 4a
- 9: first loss function
- 9a: rating by first loss function 9
- 10: parameters, characterize obtaining of predictions 3a
- 10*: finally optimized state of parameters 10
- 11: second loss function
- 11a: rating by second loss function 11
- 12: parameters, characterize obtaining of predictions 4a of alarms
- 12*: finally optimized state of parameters 12
- 100: method for monitoring and/or controlling industrial process 2
- 110: obtaining predictions 3a of process variables 3
- 111: using sequence-to-sequence model
- 111 a: choosing concrete sequence-to-sequence models
- 112: encoding process variable 3 into representation 3#
- 112a: using smaller representation 3# with information bottleneck
- 113: decoding prediction 3a from representation 3#
- 120: determining predictions 4a of likely alarms 4
- 121: providing predictions 3a to classifier machine learning model 7
- 122: determining likelihood for alarms 4 based on classification scores 7a
- 123: predicting over concrete time horizon
- 130: identifying process variables 3*, parts thereof responsible for alarms 4a
- 131: determining subset 8a of potentially responsible assets 8
- 132: identifying subset 3b of variables connected to responsible assets 8a
- 133: analyzing subset 3b of variables
- 134: modifying predicted evolution 3a
- 135: simulating behavior 2a of process 2 based on modified prediction 3a*
- 136: determining whether alarm 4a is still likely to be raised
- 137: identifying candidate process variable 3 as responsible
- 138: predicting over concrete time horizon
- 139: using saliency analysis of output 7a, 7b of classifier model 7
- 140: determining remedy 4b for anomalous state
- 150: executing remedy 4b
- 160: proposing remedy 4b to operator O
- 170: rating predictions 3a with first loss function 9
- 180: optimizing parameters 10
- 181: using feedback F from operator O
- 190: rating predictions 4a with second loss function 11
- 200: optimizing parameters 12
- 201: using feedback F from operator O
- 210: determining root cause 4a* for alarm 4a
- A-C: alarms 4
- F: feedback from operator O
- O: operator of plant 1
- X-Z: process variables 3

## Claims

1. A method (100) for monitoring and/or controlling an industrial process (2) that is executed on an industrial plant (1), comprising the steps of:
• obtaining (110) predictions (3a) for future values of one or more process variables (3) that characterize the state, and/or the behavior, of the industrial process (2);
• determining (120), based at least in part on these predictions (3a) for future values, a prediction (4a) as to which one or more alarms (4) from a given set of possible alarms are likely to be raised within a predetermined time frame reaching into the future; and
• identifying (130) at least one process variable (3*) whose predicted evolution (3a) over time is responsible for the likely raising of the one or more alarms (4a).

2. The method (100) of claim 1, wherein the predictions (3a) for future values are obtained (111) by means of a sequence-to-sequence machine learning model that takes a time series of one or more process variables (3) as input and outputs a time series of one or more process variables (3) that at least partially reaches into the future.

3. The method (100) of claim 2, wherein the sequence-to-sequence machine learning model comprises (111a) a long short-term memory, LSTM, network, a recurrent neural network, RNN, a temporal convolution network, TCN, or other regression model, and/or a transformer network.

4. The method (100) of any one of claims 1 to 3, wherein the obtaining (110) of predictions (3a) for future values of one or more process variables comprises:
• encoding (112), by means of a trained encoder model (5), a sequence of one or more values of the one or more process variables (3) into a representation (3#); and
• decoding (113), by means of a trained decoder model (6), the sought predictions (3a) from this representation (3#).

5. The method (100) of claim 4, wherein the representation (3#) depends (112a) on fewer independent variables than the sequence of the one or more values of the one or more process variables (3).

6. The method (100) of any one of claims 1 to 5, wherein the determining (120) of the prediction (4a) as to which alarms (4) are likely to be raised comprises:
• providing (121) predicted future values (3a) to a classifier machine learning model (7) that determines classification scores (7a) with respect to one or more classes corresponding to alarms; and
• determining (122) the likelihood that a particular alarm (4) is raised based at least in part on the corresponding classification score (7a).

7. The method (100) of claim 6, wherein at least one process variable (3*) whose predicted evolution over time is responsible for the likely raising of a given alarm (4a) is identified (139) based at least on a saliency analysis of the output (7a, 7b) of the classifier machine learning model (7).

8. The method (100) of any one of claims 1 to 7, wherein the identifying (130) of at least one process variable (3*) whose predicted evolution over time is responsible for the likely raising of a given alarm (4) comprises:
• determining (131), based on information about the topology of the industrial plant (1), out of a complete set of assets (8), a subset (8a) of assets (8) that have a potential to contribute to the raising of the given alarm (4a);
• identifying (132), from a complete set of process variables (3) of the industrial process (1), a subset (3b) of process variables (3) that are indicative of the operating state of at least one asset (8) from the subset (8a) of assets (8); and
• analyzing (133), for at least one process variable (3) from the subset (3b) of process variables (3), whether this process variable (3) is responsible for the likely raising of the given alarm 4a.

9. The method (100) of any one of claims 1 to 8, wherein the identifying at least one process variable (3*) whose predicted evolution over time is responsible for the likely raising of a given alarm (4a) comprises:
• modifying (134) the predicted evolution (3a) of at least one candidate process variable (3) by removing, from this predicted evolution (3a), at least one suspected anomaly;
• simulating (135) the behavior (2a) of the industrial process (2) given this modified evolution (3a*) of the at least one candidate process variable (3);
• determining (136), based on the outcome (2a) of this simulation, whether the given alarm (4a) is still likely to be raised; and
• if the given alarm (4) is no longer likely to be raised, identifying (137) the candidate process variable (3) as one process variable (3*) whose predicted evolution over time is responsible for the likely raising of the given alarm (4).

10. The method (100) of any one of claims 1 to 9, further comprising: in response to determining that an alarm (4a) is likely to be raised,
• determining (140) a remedy (4b) for the anomalous state of the industrial process, and/or of the industrial plant, indicated by the alarm (4a); and
• executing (150) this remedy (4b) by means of physical interaction with the industrial process (2), and/or with the industrial plant (1); and/or
• proposing (160) this remedy (4b) to an operator (O) of the industrial plant (1).

11. The method (100) of any one of claims 1 to 10, further comprising:
• rating (170), by a predetermined loss function (9), how well predictions (3a) for values of one or more process variables (3) at particular future points in time are in agreement with actual values of these process variables (3) acquired later for these points in time; and
• optimizing (180) parameters (10) that characterize how the future values (3a) of one or more process variables (3) are predicted towards the goal of improving the rating (9a) by the loss function (9).

12. The method (100) of any one of claims 1 to 12, further comprising:
• rating (190), by a predetermined loss function (11), how well predicted likely alarms (4a) for time frames in the future correspond to alarms (4) that have later actually been raised in these time frames; and
• optimizing (200) parameters (12) that characterize how likely alarms (4a) are predicted towards the goal of improving the rating (11a) by the loss function (11).

13. The method (100) of claim 12, wherein, out of the complete set of all alarms (4) available in the industrial plant (1), only a given subset (4c) of important alarms (4) is considered (191) for the rating (11a) by the loss function (11).

14. The method (100) of any one of claims 11 to 13, wherein the optimizing (180, 200) of the parameters (10, 12) is further based (181, 201) on feedback (F) from an operator (O) of the industrial plant (1) as to which process variables (3) are relevant for the likelihood of a particular alarm (4) or not.

15. The method (100) of any one of claims 1 to 14, further comprising: determining (210), based at least in part on the identification of at least one process variable (3*) whose predicted evolution over time is responsible for the likely raising of an alarm (4a), a likely root cause (4a*) for the alarm (4a) in at least one asset (8) of the industrial plant (1).

16. The method (100) of any one of claims 1 to 16, wherein the future values (3a) of one or more process variables (3), and/or the alarms (4a) that are likely to occur, are predicted (123, 138) for a temporal horizon reaching at most 10 minutes, preferably at most 5 minutes, into the future.

17. A computer program, comprising machine-readable instructions that, when executed by one or more computers and/or compute instances, cause the one or more computers and/or compute instances to perform the method (100) of any one of claims 1 to 16.

18. A non-transitory machine-readable data carrier, and/or a download product, with the computer program of claim 17.

19. One or more computers and/or compute instances with the computer program of claim 17, and/or with the machine-readable data carrier and/or download product of claim 18.
